# EUROPEAN PATENT APPLICATION

(11) **EP 2 830 321 A1**
(43) Date of publication of application: **28.01.2015**
(21) Application number: 14153171.5
(22) Date of filing: 30.01.2014
(51) Int. Cl.: H04N 21/422, G10L 17/00, H04N 21/442

(54) **Display apparatus and method for providing personalized service thereof**

(30) Priority: 25.07.2013 KR 20130088004
(71) Applicant: Samsung Electronics Co., Ltd, Gyeonggi-do 443-742 (KR)
(72) Inventor: Kim, Hyun-woo, Gyeonggi-do (KR)
(74) Representative: Walaski, Jan Filip

(57) **Abstract**

A display apparatus is provided, which includes a storage configured to store voice patterns of at least one user and personalization information set with respect to at least one user, a receiver configured to receive a user voice, and a controller configured to detect the personalization information that corresponds to the voice pattern of the user voice from the storage and to control a function of the display apparatus according to the detected personalization information.

## Description

The present invention relates to a display apparatus and a method for providing a personalized service thereof, and more particularly to a display apparatus that is controlled by user voice and a method for providing a personalized service thereof.

Recently, technologies have developed which permit display devices to adopt various functions. Users not only can view content through such display devices but also can experience various kinds of content and applications by interacting with the Internet or the like. One example of such a display device that provides various functions is a smart TV.

As a smart TV includes various functions, a control device that is required to use such functionality is complicated. Accordingly, in order to ease use of the various functions caused by a complicated control device, it is necessary to simplify the control device that is used with the smart TV and a control method thereof.

In the case of a personal terminal, such as a portable phone or a tablet PC, which is used by a single user, it is possible to personalize functions. In contrast, a smart TV is commonly used by plural users, and thus is unable to personalize functions of the smart TV. Accordingly, in using a display device, such as a TV, it may be difficult for each of the plural users to retrieve personalized content desired by a corresponding user or to configure a screen with a personalized control menu desired by a corresponding user.

Accordingly, there is a need for providing a personalized service to each of a plurality of users who commonly use a display device.

An aspect of the present disclosure is to provide a display apparatus and a method for providing a personalized service thereof, which can provide the personalized service according to a user's voice command.

According to one aspect of the present disclosure, a display apparatus includes a storage configured to store voice pattern information of at least one user and personalization information associated with the at least one user, a receiver configured to receive input from a user; and a controller configured to detect personalization information of the user corresponding to voice pattern information of the user and to control a function of the display apparatus according to the detected personalization information.

The personalization information may include identification information of the at least one user, and if a user input corresponding to a command for turning on the display apparatus is received, the controller turns on the display apparatus and automatically logs into at least one user account using the identification information that corresponds to the user input.

If the user input corresponding to a command for turning off the display apparatus is received, the controller turns off the display apparatus and automatically logs out of the at least one user account. The display apparatus according to one aspect of the present exemplary embodiments may further include a display configured to display at least one menu, wherein the controller controls at least one of a shape, a size, a position, a color, and a menu display order of the at least one menu according to the detected personalization information.

The controller may provide at least one of a personal application service for automatically executing an application that corresponds to the detected personalization information, a recommendation service for recommending a menu that corresponds to the detected personalization information, a communication service for displaying a communication screen that corresponds to the detected personalization information, and a channel selection service for selecting a broadcasting channel that corresponds to the detected personalization information.

The display apparatus according to one aspect of the present exemplary embodiments may further include a display; and a sensor configured to sense a user's eye, wherein if it is determined that the user's eye is not directed to the display for a predetermined time, the controller may change a current mode to a standby mode.

If a plurality of users' eyes are sensed by the sensor, the controller may change the current mode to a common mode for controlling functions of the display apparatus according to a default setting.

If the user input is received having a voice pattern that is different from the voice patterns stored in the storage, the controller may change a current mode to a common mode for controlling the function of the display apparatus according to a pre-stored default setting. According to another aspect of the present disclosure, method for providing a personalized service of a display apparatus, includes storing voice pattern information of at least one user and personalization information associated with the at least one user, receiving a user input, and detecting the personalization information of the user corresponding to voice pattern information of the user, and controlling a function of the display apparatus according to the detected personalization information. The personalization information may include identification information of the plurality of users, and the controlling may include if a user input corresponding to a command for turning on the display apparatus is received, turning on the display apparatus, and automatically logging into at least one user account using the identification information that corresponds to the user input. The controlling may further include if the user input corresponding to a command for turning off the display apparatus is received, turning off the display apparatus, and performing auto-logout from the at least one user account.

The controlling may include controlling at least one of a shape, a size, a position, a color, and a menu display order of a displayed menu according to the detected personalization information.

The controlling may include providing the personalized service that corresponds to the detected personalization information, wherein the personalized service may include at least one of a personal application service for automatically executing an application that corresponds to the detected personalization information, a recommendation service for recommending a menu that corresponds to the detected personalization information, a communication service for displaying a communication screen that corresponds to the detected personalization information, and a channel selection service for selecting a broadcasting channel that corresponds to the detected personalization information.

The method for providing a personalized service according to one aspect of the present exemplary embodiments may further include sensing a user's eye; and if it is determined that the user's eye is not directed to the display apparatus for a predetermined time, changing a current mode to a standby mode.

The method for providing a personalized service according to one aspect of the present exemplary embodiments may further include if a plurality of users' eyes are sensed, changing the current mode to a common mode for controlling functions of the display apparatus according to a default setting.

The method for providing a personalized service according to one aspect of the present exemplary embodiments may further include if the user input having a voice pattern different from the voice patterns stored in the storage is received, changing a current mode to a common mode for controlling the function of the display apparatus according to a default setting.

According to another aspect of the present exemplary embodiments, a display apparatus is provided including a storage configured to store user identifiers and user personalization information, a detector configured to detect user presence, a receiver configured to receive input from at least one user, and a display configured to present personalized output according to user personalization information associated with the user.

In one exemplary embodiment, the detector comprises a visual input device capable of sensing a user's eye.

The display apparatus may include a controller configured to cause the display to present a default output if the detector detects a presence of more than one user.

In one embodiment, the user may be automatically logged out of any automatically authenticated services when the controller causes the display to present a default output. As described above, according to various embodiments of the present disclosure, a user can use a personalized service using user's voice.

The above and other aspects, features and advantages of the present disclosure will be more apparent from the following detailed description when taken in conjunction with the accompanying drawings, in which:
FIG. 1 is a block diagram of display apparatus according to an exemplary embodiment of the present disclosure;
FIG. 2 is an a flowchart of a method for providing a personalized service according to an exemplary embodiment of the present disclosure;
FIGS. 3 to 5 are views illustrating an example of user registration with respect to a display apparatus according to an exemplary embodiment of the present disclosure;
FIGS. 6 to 9 are views of a display apparatus according to various exemplary embodiments of the present disclosure;
FIG. 10 is a block diagram of a display apparatus according to another exemplary embodiment of the present disclosure;
FIG. 11 is a flowchart of a method for providing a personalized service according to another exemplary embodiment of the present disclosure;
FIG. 12 is a block diagram of a controller according to an exemplary embodiment of the present disclosure;
FIG. 13 is a block diagram illustrating the overall configuration of a display apparatus according to an exemplary embodiment of the present disclosure; and
FIG. 14 is a block diagram of a software structure that is used by a display apparatus according to an exemplary embodiment of the present disclosure.

Hereinafter, embodiments of the present disclosure are described in detail with reference to the accompanying drawings.

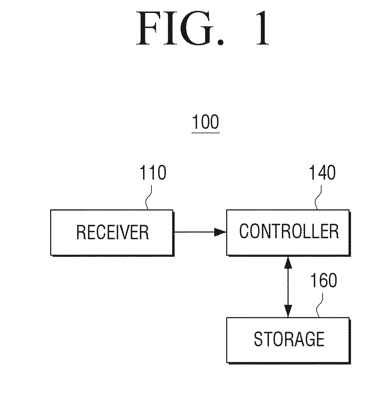

FIG. 1 is a block diagram of a display apparatus 100 according to an embodiment of the present disclosure. Referring to FIG. 1, a display apparatus 100 includes an receiver 110, a controller 140, and a storage 160.

The receiver 110 receives user input (e.g., audio or voice). In this case, the user input may include various kinds of information, such as language information, a voice pattern, an emotion status, and a vocal environment. Here, the language information may mean an intention to be indicated as a language. Further, the voice pattern may mean various kinds of information (e.g., voice frequency and voice amplitude) related to a voice that is received at the receiver 110. That is, user voices have different patterns for respective users, and even if a plurality of users exist, the respective users can be distinguished by their voice patterns. Further, user voices may differ depending on an emotional status or the local environment. The receiver 110 may receive a user voice as input that includes various kinds of information as described above. The receiver 110 may be implemented, for example, by a microphone.

The storage 160 may store registered user voices. Specifically, the storage 160 may store voice patterns of specific users and language information that is personalization information. Accordingly, the storage 160 may store voice frequencies and voice amplitudes of specific users. Further, the storage 160 may store personalization information including language information (e.g., at least one command) of specific users. Here, the personalization information means information that is specific to each user. Personalization information may include various kinds of information, such as a voice command inherently set by the user, an operation of the display apparatus 100 that corresponds to the voice command, personal information including a user ID and a password, a service frequently used by the user, a name of a program frequently executed, a broadcasting channel, a web site, an e-mail address, or an SNS address.

On the other hand, the storage 160 may store received user voices, and may update previously registered user voices accordingly. That is, the storage 160 may store user voices (voice patterns and personalization information) that are input by users in order for a predetermined time period, and the controller may compare the currently received user voice with a user voice previously received and stored in the storage 160. If it is determined that the currently received user voice pattern information is the same as user voice pattern information previously received and stored in the storage 160 as the result of the comparison, the currently received user voice pattern information is stored in the storage 160. In this case, it is preferable that the most recently received and stored user voice pattern is compared with newly received user voice pattern information.

On the other hand, the storage 160 may store the user voices received for the predetermined time period. The controller 140 may compare a newly received user voice with a user voice stored in the storage 160. Accordingly, if it is determined that the user voice stored in the storage 160 is the same as the newly received user voice, the controller 140 changes the current mode to a personal mode. The personal mode is a mode in which various kinds of functions may be performed according to the personalization information stored for a respective user. The details of the personal mode will be described later. Further, the storage 160 may store a plurality of user voice patterns and the personalization information individually set for a plurality of users.

The controller 140 may control the display apparatus 100 according to audio received through the receiver 110. Here, a user voice may be analyzed in terms of time waveforms, spectrograms, frequency spectrums, and amplitude envelopes, and through such analysis, it is determined whether the user voice received through the receiver 110 is the same as a registered user voice. Speaker information may be extracted through voice analysis which may include speaker recognition, speaker identification, and speaker verification, and if there is any voice generation, it can be recognized whether the generated voice coincides with a pre-registered voice or whose voice among the registered user voices corresponds to the generated voice. Specifically, a voice signal input through the receiver 110 is sampled and converted into a digital signal by an A/D converter. The controller 140 compares a feature signal that is obtained by removing a noise signal from the converted digital signal with voices that are pre-registered and stored in the storage 160, and extracts a registered voice that is most similar to the feature signal.

Accordingly, the controller 140 can detect the personalization information that corresponds to the voice pattern of the user voice from the storage 160. That is, the controller 140 compares the user voice pattern that is received through the receiver 110 with the user voice pattern that is stored in the storage 160. If it is determined that the voice patterns are to the same as each other, the controller 140 compares language information that is received through the receiver 110 with language information that is stored in the storage 160. If it is determined that the input language information corresponds to the stored language information, the controller 140 may perform a control operation according to the language information received through the receiver 110. That is, if it is determined that a user voice received through the receiver 110 corresponds to personalization information that is stored in the storage 160, the controller 140 can control the function of the display apparatus 100 according to the detected personalization information.

On the other hand, the storage 160 may store a plurality of user voices. Accordingly, the controller 140 may compare a user voice pattern received through the receiver 110 with a plurality of user voice patterns stored in the storage 160. If it is determined that the received user voice pattern corresponds to one of the plurality of user voice patterns stored, the controller 140 may compare the received language information with language information stored in the storage 160. If it is determined that the received language information corresponds to the stored language information, the controller 140 may perform the control operation according to the received language information.

A plurality of users may individually store voice commands that meet their individualities. For example, in turning on a TV, a first user may set a voice command "Turn on the TV", and a second user may set a voice command "Hello, TV". In this case, if the first user says "Hello, TV", the controller 140 performs no operation, while if the second user says "Hello, TV", the controller 140 turns on the TV. In contrast, if the second user says "Turn on the TV", the controller 140 performs no operation, while if the first user says "Turn on the TV", the controller 140 turns on the TV. In addition, in the case where the first user frequently accesses AAA web site and frequently executes BBB game, the controller 140 can automatically log into the AAA web site and the BBB game in a personal mode of the first user. That is, if the first user says "Turn on the TV", the user may be logged into the AAA web site and the BBB game simultaneously with the TV turning on.

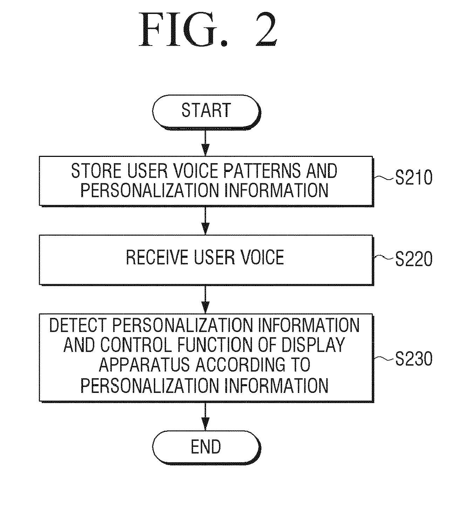

FIG. 2 is an exemplary flowchart of a method for providing a personalized service according to an embodiment of the present disclosure.

First, the display apparatus stores user voice patterns and personalization information (S210). The user voice patterns and the personalization information are as described above. Further, the display apparatus may include a microphone, and user voice may be received through the microphone. Accordingly, the display apparatus may store the voice pattern and the language information included in the user voice, and the stored user voice may be registered as a voice of a specific user.

In this case, the language information may mean a user intention to be indicated as a language. Accordingly, all voices produced by a user in a daily life may be included in the language information. Of such language information, a voice command for controlling the display apparatus may be stored. For example, in the case of controlling turning on a TV, a voice command "Turn on the TV" may be stored.

On the other hand, the display apparatus may register a plurality of user voices. Accordingly, a plurality of voice patterns may be stored in the display apparatus. Further, voice commands that are stored in the display apparatus may be the same as one another or may be different from each other depending on the plurality of users being registered. For example, in controlling turning on a TV, the first user may store a voice command "Turn on the TV", the second user may store a voice command "Turn off the TV", and the third user may store a voice command "I love you".

Thereafter, the display apparatus receives a user voice (S220). As described above, the user voice may be received through the microphone. Further, the received voice includes user voice patterns and personalization information.

Thereafter, the display apparatus may compare the received voice pattern with a stored voice pattern. If it is determined that the received voice pattern is to the same as the stored voice pattern as the result of the comparison, the received user voice is determined as the user voice registered in the display apparatus. If it is determined that the received voice pattern is different from stored voice patterns, the received user voice is determined as a user voice that has not been registered in the display apparatus.

If it is determined that the received user voice is not the registered user voice, the display apparatus may not perform a corresponding operation even if a received voice command corresponds to a registered voice command. In this case, regardless of the received user voice, the display apparatus can keep the current state. Here, the term "the display apparatus keeps the current state" means that the display apparatus is not affected by the received user voice. That is, if the display apparatus is turned off, it remains turned off.

If it is determined that the received user voice is a registered user voice, personalization information is detected according to the received user voice, and the functions of the display apparatus may be controlled according to the detected personalization information (S230).

As described above, personalization information may include a voice command that is user identification information, an operation of the display apparatus that corresponds to the voice command, a user ID, a password, and other personal information.

Specifically, if it is determined that the received user voice is a registered user voice, the display apparatus analyzes a voice command that is included in the received user voice. If it is determined that the received voice command corresponds to a stored voice command, the display apparatus performs the corresponding operation. For example, if the voice command that is stored to turn on the TV is "Turn on the TV", and the received voice command is "Turn on the TV", a control operation to turn on the display apparatus may be performed. In this case, if the received voice command is "I love you" and a control operation with respect to the voice command "I love you" is not stored, the display apparatus may keep the current state. Further, if a voice command "Channel no. 10" is pre-stored to output channel no. 10 of the TV, and the TV is in a turn-off state or a standby mode state, the received voice command "Channel no. 10" may cause the TV to be turned on and caused to output channel no. 10.

Further, even in the case where the operation that is performed by the received voice command requires user authentication, the same method is applied thereto. In this case, it is necessary that information required for the user authentication is pre-stored. For example, a user may access an e-mail main page in a state where the display apparatus is turned on. In the e-mail main page, the user may perform login by inputting an ID and a password using a touch pad that is displayed on a screen of a remote control device or the display apparatus. The user may set a voice command for a control operation to confirm an e-mail through the display apparatus to "E-mail" and store the set voice command. That is, if the user says "E-mail" in a state where the control operation to confirm the e-mail is set, a user voice pattern and a voice command for "E-mail" are stored. Accordingly, if the user says "E-mail" when the display apparatus is turned off or outputs a moving image, the display apparatus may display an e-mail page as logged in by automatically inputting an e-mail access ID and a stored password. A case where the auto-login is performed with respect to a user account has been described, but the present exemplary embodiments are not limited thereto. That is, even in the case where auto-logout is performed with respect to the user account, the same method may be applied thereto.

As described above, a user who is registered in the display apparatus can be provided with a personalized service through the display apparatus using stored voice pattern and personalization information. Further, by storing voice patterns and personalization information of a plurality of users, the personalized service can be provided to a plurality of users through one display apparatus. On the other hand, although the personal mode has been described as a specific example, the present exemplary embodiments is not limited thereto.

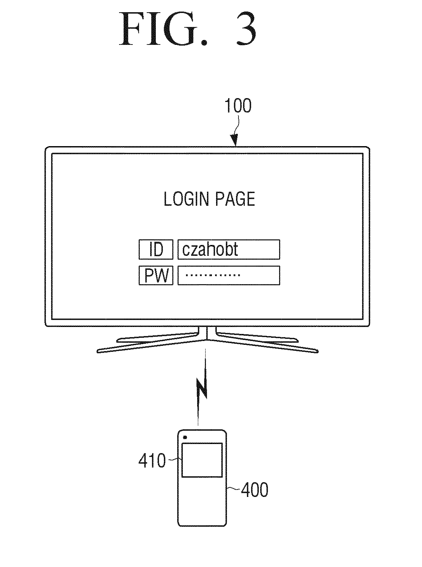

FIGS. 3 to 5 are views illustrating an example of user registration with respect to a display apparatus according to an embodiment of the present disclosure.

Referring to FIG. 3, a user may access a personal page for registering a user voice when the display apparatus 100 is turned on. In this case, in order for the user to turn on the display apparatus 100 or to access the personal page, the user may use a remote control device 400 or the display apparatus 100. For example, using a touch panel that is included in the remote control device 400 or a touch panel that is displayed on a display panel of the display apparatus 100, the user may turn on/off the display apparatus 100, register personalization information, or access a personal page.

On the other hand, in order to access the personal page, the user may access a login page for user authentication. For example, by inputting a user ID and a password to a login page as illustrated in FIG. 3, the user can access the personal page. In this case, it is necessary that personalization information is pre-stored in the display apparatus 100. That is, the user can login to the personal page by inputting the user ID and the password among the personalization information that is pre-stored in the display apparatus 100.

If the user successfully logs in using the user authentication, a control list page for controlling the display apparatus 100 may be displayed. That is, a plurality of control lists are displayed on the control list page, and the user can select one item of the plurality of control lists being displayed. For example, the user may select a control item to turn on the display apparatus 100 among the plurality of control lists being displayed.

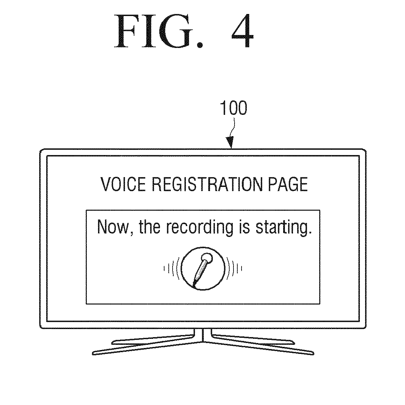

If the user selects one control item among the plurality of control lists, a voice registration page as illustrated in FIG. 4 is displayed, and the user voice can be registered through the voice registration page. That is, a user voice pattern and a voice command for one control item that is selected from the control list page may be stored. Accordingly, on the voice registration page, the voice command for controlling the display apparatus 100 can be stored together with the voice pattern. On the control list page as described above, the user may select the control item to turn on the display apparatus 100, and on the voice registration page as illustrated in FIG. 4, a message for inputting the user voice may be displayed. In this case, a sound for inputting the user voice may be displayed.

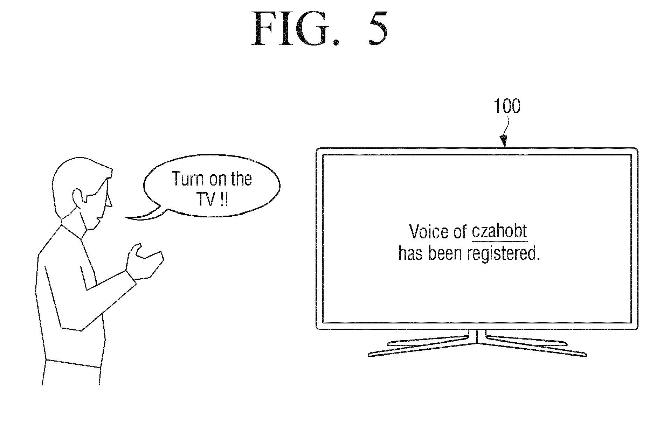

Thereafter, as illustrated in FIG. 5, the user may say "Turn on the TV". If the user speaks as described above, the display apparatus 100 may receive, store, and register the user's voice. That is, if the user speaks a specific control command, the display apparatus 100 may set and register the voice sound as a specific control command. In the above-described example, since the user selects the control item to turn on the display apparatus 100 and speaks "Turn on the TV", the display apparatus 100 may store and register "Turn on the TV" as a control command to turn on the display apparatus 100. Further, a message for notifying the user that the control command has been stored and registered may be displayed, or a sound may be output.

In this case, the display apparatus 100 may enable the user to confirm the voice command that is stored and registered. In the above-described example, the display apparatus 100 may output a sound "Is 'Turn on the TV' your input command?" while displaying an option screen of "Yes" or "No" at the same time. Thereafter, if the user selects "Yes", the final registration is completed, while if the user selects "No", another voice command may be input or the voice command registration may be canceled.

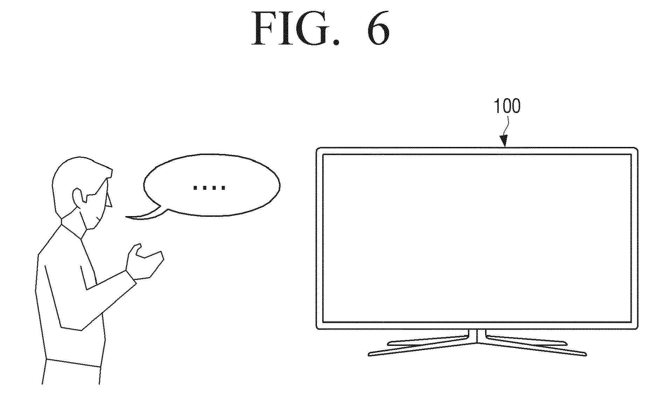

FIGS. 6 to 9 are views of the display apparatus 100 according to various embodiments of the present disclosure.

FIG. 6 illustrates a state where the display apparatus 100 is turned off. When the display apparatus 100 is not in use, the user may turn off a power supply to the display apparatus 100. Here, a power button that is provided on the display apparatus 100 may be pressed to turn off the power. Further, the power may also be turned off through pressing of a power button that is provided on the remote control device 400 or operating of a touchpad 410 provided on the remote control device 400. To turn off the power supply to the display apparatus 100 in this manner is called soft power-off. Further, to turn off the power through unplugging a power cable that is connected to the display apparatus 100 from a power supply unit is called hard power-off. FIG. 6 illustrates that the display apparatus 100 is in a soft power-off state.

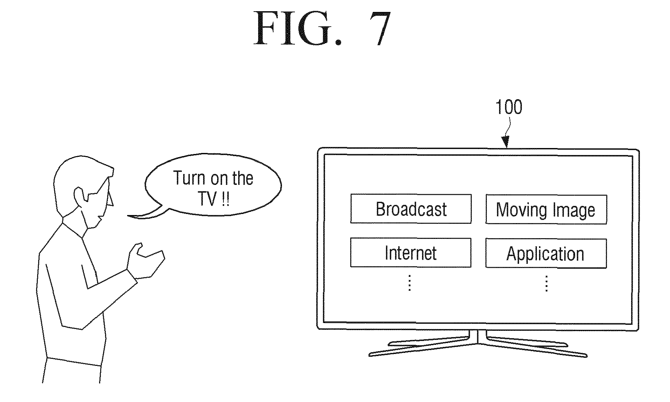

As described above, the display apparatus 100 according to an embodiment of the present disclosure includes the receiver. The receiver receives a user voice, and the controller determines whether to control the display apparatus 100 according to the received user voice. Here, it is necessary for the receiver to receive the user voice not only in a state where the display apparatus 100 is turned on but also in a state where the display apparatus 100 is turned off. That is, in a state where the display apparatus 100 is turned off, the display apparatus 100 can receive a voice command for turning on the display apparatus 100 or a voice command for displaying specific content or a specific application from the user. Accordingly, the receiver and the controller can be kept turned on even if the display apparatus 100 is in the soft power-off state. Further, the receiver may receive a user voice, and if it is determined that the received user voice is the same as a registered voice pattern or voice command, the controller may output a wakeup signal for turning on the remaining part of the display apparatus 100. The case where it is determined that the received user voice is to the same as the registered voice pattern and voice command will be described with reference to FIGS. 7 to 9.

In the state where the display apparatus 100 is in the soft power-off state as illustrated in FIG. 6, the user may speak a command for turning on the display apparatus 100. Accordingly, as illustrated in FIG. 7, if the user says "Turn on the TV", the receiver receives and transmits the sound to the controller, and the controller compares the received user voice with stored user sounds. That is, the controller compares the received user voice pattern with stored user voice patterns. If it is determined that the received user voice pattern is the same as a stored user voice pattern as the result of the comparison, the controller compares the received voice command with the stored voice command. Further, if it is determined that the received voice command is to the same as the stored voice command, the controller may control the display apparatus 100 to correspond to the received voice command. That is, as illustrated in FIG. 7, the display apparatus 100 may turn on the display apparatus 100, which corresponds to a control command in response to the received user voice "Turn on the TV".

On the other hand, if the received user voice pattern is the same as a registered voice pattern and the received voice command is the same as a registered voice command, the mode of the display apparatus 100 is changed to a personal mode (or a private mode). That is, the personal mode means a state where the display apparatus 100 is personalized, and in this mode, the display apparatus 100 operates according to the setting of a user having the same voice as the registered voice.

For example, if a first user who is a registered user has made a menu arrangement as illustrated in FIG. 7 on a display that displays at least one menu, a menu as illustrated in FIG. 7 may be displayed on the display in a personal mode of the first user. In this case, a registered user can adjust the shape, size, position, color, and display order of at least one menu. That is, the first user can set the menu that is displayed on the display according to user's taste, and then if the mode is changed to the personal mode of the first user, the menu that is previously set by the first user can be displayed.

On the other hand, as illustrated in FIG. 7, the controller may operate to display various menus. That is, menus that are displayed on the display may include a personal application service, a recommended service, a communication service, and a channel selection service.

The personal application service may automatically execute a personal application of a registered user. That is, in the personal mode of the registered user, the registered user may be automatically logged into a personal application. In this case, if one of a plurality of personal applications is selected, the selected personal application can be executed.

The recommended service may recommend a menu to a registered user. That is, the registered user can set the recommended service so that frequently used menus are arranged in order. Accordingly, in the personal mode of the registered user, a predetermined menu may be displayed on the recommended service screen.

The communication service is to display a personal communication service screen of a registered user. That is, in the personal mode of the registered user, the registered user may be automatically logged into a communication service. In this case, if one of a plurality of communication services is selected, the selected communication service can be executed.

The channel selection service may select a broadcasting channel and to display a broadcast corresponding to the selected channel. That is, the registered user can set the channel selection service so that frequently viewed broadcasting channels are arranged in order. Accordingly, in the personal mode of the registered user, a predetermined broadcasting channel may be displayed on the channel selection service screen.

On the other hand, if it is determined that a received user voice pattern is different from stored user voice patterns, the display apparatus 100 might not compare the received voice command with the stored voice command. That is, if the received user voice pattern is different from stored user voice patterns, the display apparatus 100 may not perform the control command that corresponds to the received voice command even if the received user voice command is the same as the stored user voice command. Accordingly, the display apparatus 100 can keep the current state.

Further, even if it is determined that the received user voice pattern is different from the stored user voice pattern, the display apparatus 100 may compare a received voice command with a stored voice command. If it is determined that the received voice command is different from the stored voice command as the result of the comparison, the display apparatus 100 may not perform the control command corresponding to the received voice command. That is, the display apparatus 100 may keep the current state. However, if it is determined that the received voice command is to the same as the stored voice command, the display apparatus 100 may perform a control command corresponding to the received voice command. However, the received voice pattern is different from the stored voice pattern in this case, and thus this case is a case where the voice command is received from an unregistered user. Accordingly, in this case, the mode is changed to a common mode. Further, even in the case where a registered user or an unregistered user turns on the display apparatus 100 using a power button arranged on the display apparatus 100 or using a power button arranged on the remote control device 400, the mode may be changed to the common mode.

The common mode is also called a guest mode, which corresponds to the above-described personal mode, and means that the display apparatus 100 operates in a non-personalized state, unlike the personal mode. That is, if the received user voice pattern is different from the stored voice pattern or the received user voice command is different from the stored voice command, the mode of the display apparatus 100 is changed to the common mode. In the above-described example, if the second user, who is an unregistered user, turns on the display apparatus 100, the menu set by the first user who is a registered user is not displayed. In this case, the mode of the display apparatus 100, which is turned on by the second user who is the unregistered user, is changed to the common mode, and in the common mode, the state according to the default setting of the display apparatus 100 is displayed.

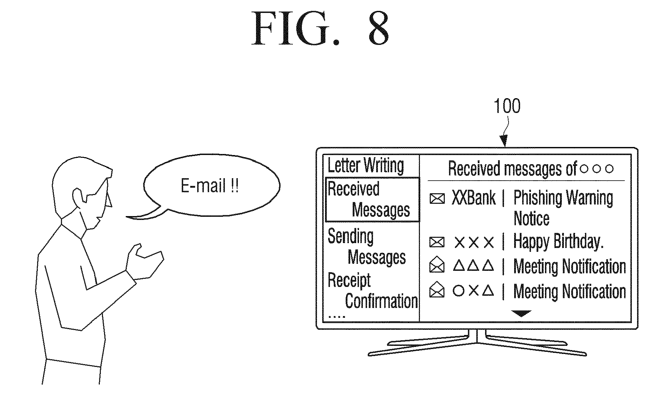

On the other hand, the user can confirm a personal e-mail from the display apparatus 100. The setting of the user voice for confirming the e-mail is as described above. As illustrated in FIG. 8, the user may say "E-mail" that is a voice command for confirming the e-mail. The display apparatus 100 receives the "E-mail" that is spoken by the user, and compares the received user voice pattern with the registered voice pattern. If it is determined that they are the same as the result of the comparison, the display apparatus 100 compares the received voice command with the registered voice command. If it is determined that they are the same as the result of the comparison, the display apparatus 100 may display a user e-mail page that is in an auto-login state.

The confirmation of the e-mail as described above may be performed in various states, such as a state where the display apparatus 100 is turned off and a state where content is displayed. That is, if the user says "E-mail" in a state where the display apparatus 100 is turned off, the display apparatus 100 may be turned off, and the e-mail page in the auto-login state may be displayed at the same time. Further, if the user sounds "E-mail" in a state where the content is displayed, the e-mail page in the auto-login state may be displayed.

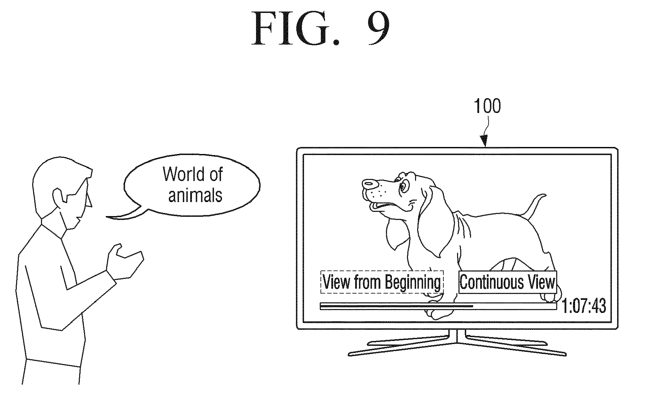

On the other hand, the user can perform continuous view of the content from the display apparatus 100. Hereinafter, this will be described with reference to FIG. 9.

For example, the user may store and register "World of Animals" in the display apparatus 100 as a voice command for displaying content titled "World of Animals". Accordingly, if the user says "World of Animals", the corresponding content may be displayed. In a state where the display apparatus 100 that is in the personal mode displays the "World of Animals", the user may view other content or may turn off the display apparatus 100 before the corresponding content is terminated. In this case, the display apparatus 100 that is in the personal mode may store the end time of the corresponding content which corresponds to the time when other content is displayed or the display apparatus 100 is turned off. Accordingly, if the user says "World of Animals" again after the user views other content or turns off the display apparatus 100 during viewing of the "World of Animals", the screen as illustrated in FIG. 9 may be displayed. That is, the display apparatus 100 may perform resume viewing from the end time of the corresponding content, or may perform view again from the beginning. Accordingly, in the personal mode, the user can select view from the beginning or continuous view. If the user selects view from the beginning, the display apparatus 100 may display the corresponding content from the beginning, while if the user selects continuous view, the display apparatus 100 may resume displaying the corresponding content from the end time of the previous content.

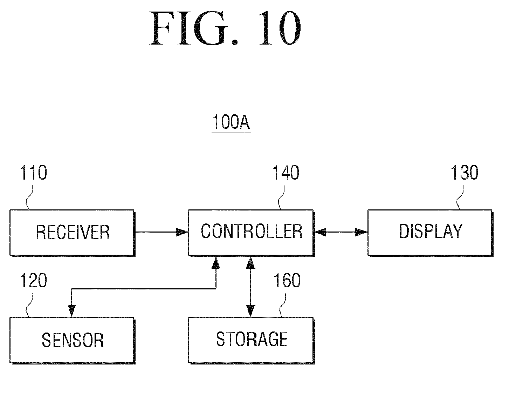

FIG. 10 is an exemplary block diagram of a display apparatus 100A according to another embodiment of the present disclosure. Referring to FIG. 10, a display apparatus 100A according to another embodiment of the present disclosure includes a receiver 110, a controller 140, a storage 160, a sensor 120, and a display 130.

Since the receiver 110, the controller 140, the storage 160, and the display 130 are the same as those as described above, the explanation thereof will be omitted. On the other hand, the sensor 120 may sense a user's eye and transmit the result of the sensing to the controller 140. In this case, the sensor 120 may be a camera.

The user experiences the display apparatus 100A personalized in the personal mode. In the personal mode, unlike the common mode, it is easy to access user personalization information. Accordingly, in order to end the personal mode, the user may set the common mode by exiting the personal mode, or by turning off the display apparatus 100A. However, in a state where the user does not exit the personal mode or does not turn off the display apparatus 100 in the personal mode, another user may control the display apparatus 100A. In this case, user information in the corresponding personal mode may be modified by another user or the personalization information may be leaked.

Accordingly, the sensor 120 senses the user's eye in the personal mode, and if it is determined that the user's eye is directed to the display apparatus 130, the personal mode can be kept. In this case, the personal mode can be kept unless the user turns off the display apparatus 100A or the user exits the personal mode and sets the common mode. Since a means for sensing the user's eye through the sensor 120 is already known, the details thereof will be omitted.

On the other hand, if it is determined that the user's eye is not directed to the display 130 for a predetermined time while in the personal mode, the sensor 120 may exit the personal mode, or may change the current mode to a standby mode. That is, if it is determined that the sensor 120 is unable to sense the corresponding user's eye for the predetermined time or the corresponding user's eye is not directed to the display 130 for the predetermined time in the personal mode, the controller 140 may change the mode of the display apparatus 100A to a standby mode. In this case, the user may set user's eye non-sensing time for changing the mode to the standby mode. For example, this may correspond to a case where the user falls asleep while viewing content or moves to another room while in the personal mode. In the standby mode, the user may say a pre-stored voice command to turn on/off the display apparatus 100A.

On the other hand, the sensor 120 may sense a plurality of users' eyes. In this case, if the sensor 120 senses the plurality of users' eyes, the controller 140 may change the mode of the display apparatus 100A to the common mode according to a predetermined default setting. That is, if the sensor 120 senses another user's eye while in the personal mode, the controller 140 may change the mode of the display apparatus 100A to the common mode. For example, this may correspond to a case where another user's eye is directed to the display 130 while the corresponding user views content or confirms an e-mail in the personal mode. In the common mode, the user may speak a pre-stored voice command to turn on/off the display apparatus 100A.

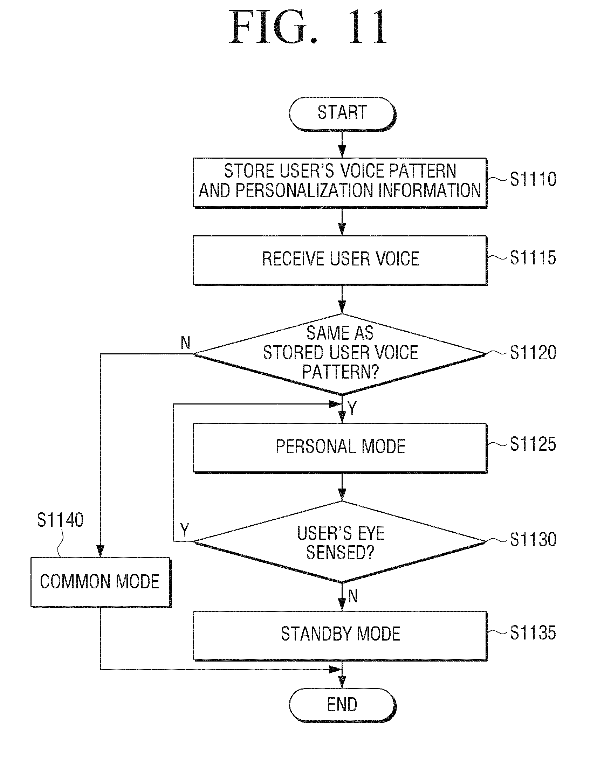

FIG. 11 is an exemplary flowchart of a method for providing a personalized service according to another embodiment of the present disclosure. Hereinafter, explanation of the portions duplicate to those as described above with reference to FIG. 10 will be omitted.

First, the display apparatus may pre-store user voice patterns and personalization information (S1110). Thereafter, the display apparatus receives a user voice (S1115). Then, the display apparatus may compare the user voice received through a microphone with a predetermined registered user voice (S1120). Since such steps are the same as those as described above with reference to FIG. 2, duplicate explanation thereof will be omitted. If it is determined that the received user voice is the same as the pre-stored user voice, the mode of the display apparatus is changed to a personal mode (S1125), while otherwise, the mode of the display apparatus is changed to a common mode (S1140).

In the personalization mode (S1125), the display apparatus can sense a user's eye (S1130). If it is determined that the user's eye is directed to the display (S1130_Y), the personal mode can be kept. Further, if it is determined that the user's eye is not directed to the display (S1130_N), the display mode can be changed to a standby mode.

On the other hand, although not illustrated in FIG. 11, the display apparatus may sense a plurality of users' eyes. If another user's eye is sensed in the personalization mode (S1125), the display apparatus may change the current mode to the common mode according to a pre-stored default setting.

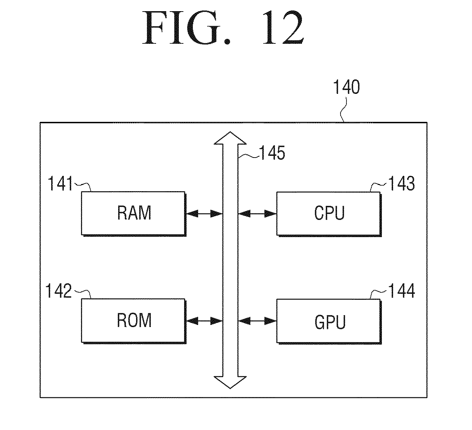

FIG. 12 is an exemplary block diagram of a controller according to an embodiment of the present disclosure.

Referring to FIG. 12, a controller 140 controls the overall operation of the display apparatus. The controller 140 may include a RAM 141, a ROM 142, a GPU 143, and a bus 145. The RAM 141, the ROM 142, the CPU 143, and the GPU 144 may be connected to each other through the bus 145.

The CPU 143 may access the storage, and may perform booting using an O/S stored in the storage. Further, the CPU 143 may performs various operations using various kinds of programs, content, and data stored in the storage. Further, the CPU 143 may analyze a handwriting trace and extracts corresponding text from the storage.

A command set for system booting may be stored in the ROM 142. If a power is supplied through an input of a turn-on command, the CPU 143 may copy an O/S stored in the storage into the RAM 141 according to a command stored in the ROM 142, and boot the system through execution of the O/S. If the booting is completed, the CPU 143 may copy various kinds of programs stored in the storage into the RAM 141, and perform various kinds of operations through execution of the programs copied into the RAM 141.

If the booting of the display apparatus 100 is completed, the GPU 144 may display an item screen, a content screen, or a search result screen. Specifically, the GPU 144 may generate a screen that includes various objects, such as an icon, an image, and text, using an operator (not illustrated) and a renderer (not illustrated). The operator may operate attribute values, such as coordinate values, shapes, sizes, and colors of the objects, according to a layout of the screen. The renderer may generate various layout screens including the objects based on the attribute values operated by the operator. The screen that is generated by the renderer may be provided to the display 130, and may be displayed in the display region.

The display 130 may display various screens as described above. The display 130 may be implemented by various types of displays, such as an LCD (Liquid Crystal Display), an OLED (Organic Light Emitting Diodes), and a PDP (Plasma Display Panel). The display 130 may include a driving circuit and a backlight unit, which may be implemented in the form of a-si TFT, LTPS (Low Temperature Poly Silicon), TFT, and OTFT (Organic TFT).

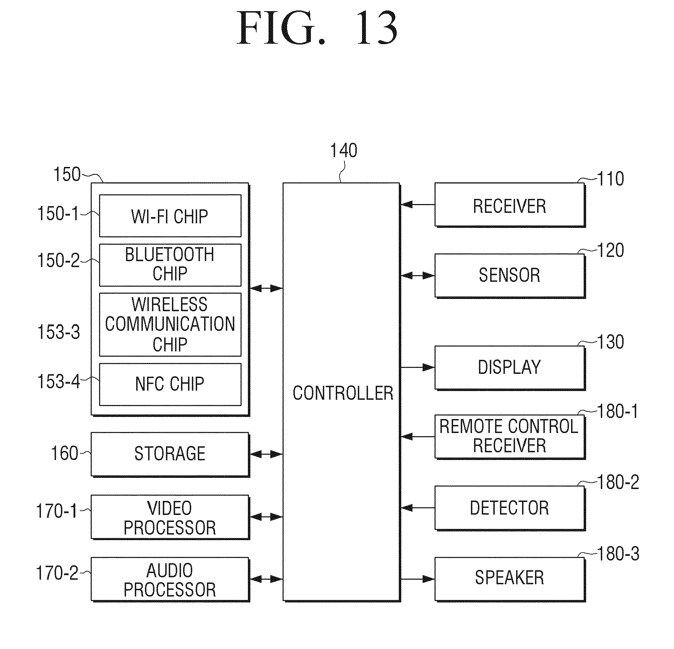

FIG. 13 is an exemplary block diagram illustrating the overall configuration of a display apparatus 100 or 100A according to an embodiment of the present disclosure.

Referring to FIG. 13, a display apparatus 100 or 100A may include a receiver 110, a sensor 120, a display 130, a controller 140, a communicator 150, a storage 160, a video processor 170-1, an audio processor 170-2, a remote control receiver 180-1, a detector 180-2, and a speaker 180-3.

The receiver 110 may operate in a configuration for receiving and converting a user voice or other sound into audio data. The controller 140 may use the user voice, which is input through the receiver 110, for item search or extraction, perform a control operation through comparison of the user voice with pre-stored user voice, or convert the user voice into the audio data to store the audio data in the storage 160. In particular, if the receiver 110 is provided, the controller 140 may compare the user voice that is received through the receiver 110 with the user voice stored in the storage 160, and if it is determined that the received user voice is the same as the stored user voice, the controller 140 perform the corresponding control operation.

The sensor 120 may capture a still image or a moving image according to a user's control. In addition, the sensor 120 may sense the user's eye. In this case, the sensor 120 may be implemented by a plurality of cameras, such as a front camera and a rear camera. In particular, if the sensor 120 is provided, the controller 140 may receive the user's eye that is sensed through the sensor 120, and if it is determined that the received user's eye is not directed to the display for a predetermined time, the controller 140 may end the personal mode and change the current mode to a common mode or a standby mode.

The display 130 may be implemented by a general LCD display or may be implemented in a touch screen type display. If the display is implemented by a touch screen, the user may touch the screen to control the operation of the display apparatus 100 or 100A. Further, if the display 130 is not implemented by the touch screen, the receiver 110 may receive signals transmitted from the remote control device and transmit the received signals to the controller 140.

The communicator 150 operates in a configuration that performs communication with various types of external devices according to various types of communication methods. The communicator 150 may include a Wi-Fi chip 150-1, a Bluetooth chip 150-2, a wireless communication chip 150-3, and an NFC chip 150-4.

The Wi-Fi chip 150-1 and the Bluetooth chip 150-2 may perform communication according to a Wi-Fi method and using Bluetooth. In the case of using the Wi-Fi chip 150-1 or the Bluetooth chip 150-2, various kinds of connection information, such as SSID and a session key, is first transmitted/received, communication connection is performed using such connection information, and then the various kinds of information are transmitted/received. The wireless communication chip 150-3 means a chip that performs communication according to various communication standards, such as IEEE, ZigBee, 3G (3rd Generation), 3GPP (3rd Generation Partnership Project), and LTE (Long Term Evolution). The NFC chip 150-4 means a chip which operates in an NFC (Near Field Communication) method that uses a band of 13.56 MHz among various RF-ID frequency bands of 135 KHz, 13.56 MHz, 433 MHz, 860-960 MHz, and 2.45 GHz.

Further, the communicator 150 may communicate with various external server devices, such as a search server.

Based on the user voice that is received through the receiver 110, the controller 140 may access various external devices through the communicator 150 and may receive an item that corresponds to a detected text. If an item that corresponds to multimedia content is selected among items that are displayed on the display 130, the corresponding multimedia content is received through the communicator 150. If the multimedia content is received, the controller 140 may extract video data and audio data through demultiplexing the multimedia content, and may control the video processor 170-1 and the audio processor 170-2 to reproduce the corresponding item through decoding of the extracted video data and audio data.

In addition, the communicator 150 may directly communicate with various types of external devices rather than a server device to perform a search.

The storage 160 is a constituent element for storing various kinds of programs and data that may be required for the operation of the display apparatus 100 and 100A. The controller 140 may control the overall operation of the display apparatus 100 or 100A using various kinds of programs and data stored in the storage 160. In addition, the storage 160 may store user voice to be registered. Specifically, the storage 160 may store user voice patterns to be registered and language information that is personalization information. Since the display 130 and the controller 140 have been described in detail in the above-described embodiments, the duplicate explanation thereof will be omitted.

The video processor 170-1 is a constituent element for processing video data which is included in the item that is received through the communicator 150 or the item that is stored in the storage 160. That is, the video processor 170-1 may perform various image processes, such as decoding, scaling, noise filtering, frame rate conversion, and resolution conversion, with respect to the video data. In this case, the display 130 may display image frames generated by the video processor 170-1.

The audio processor 170-2 is a constituent element for processing audio data that is included in the item which is included in the item that is received through the communicator 150 or the item that is stored in the storage 160. The audio processor 170-2 may perform various processes, such as decoding, amplification, and noise filtering, with respect to the audio data.

The remote control receiver 180-1 may receive an operation signal that is transmitted by an external remote control device and may transmit the received operation signal to the controller 140. In this case, the remote controller 180-1 may be formed in a certain region, such as a front portion, a side portion, or a rear portion of the external appearance of the main body of the display apparatus 100 or 100A.

The detector 180-2 may detect elements required to determine whether to change the personal mode from the user voice that is received through the receiver 110. That is, since it is required to determine whether the received user voice pattern coincides with the registered user voice pattern, the detector 180-2 may detect the voice pattern from the received user voice. Further, since it is required to determine whether the received void command is the same as the registered voice command, the detector 180-2 may detect a voice command from the received user voice.

The speaker 180-3 may output audio data generated by the audio processor 170-2.

On the other hand, in a display apparatus that supports a motion control mode or a voice control mode, a voice recognition technology or a motion recognition technology may be used in the above-described embodiments. For example, if a user performs a motion like selecting an object such as an item that the user displays on the screen, or pronounces the voice command corresponding to the object, it is determined that the corresponding object is selected, and a control operation that matches the object may be performed. In this case, such a control operation may be set to be performed not only in the personal mode but also in the common mode.

In addition, although not illustrated in FIG. 13, depending on embodiments, the display apparatus 100 may further include a USB port to which a USB connector can be connected, various external input ports for connecting to various external terminals, such a headset, a mouse, and a LAN, and a DMB chip for receiving and processing a DMB (Digital Multimedia Broadcasting) signal.

As described above, the display apparatus 100 or 100A may be implemented in various shapes.

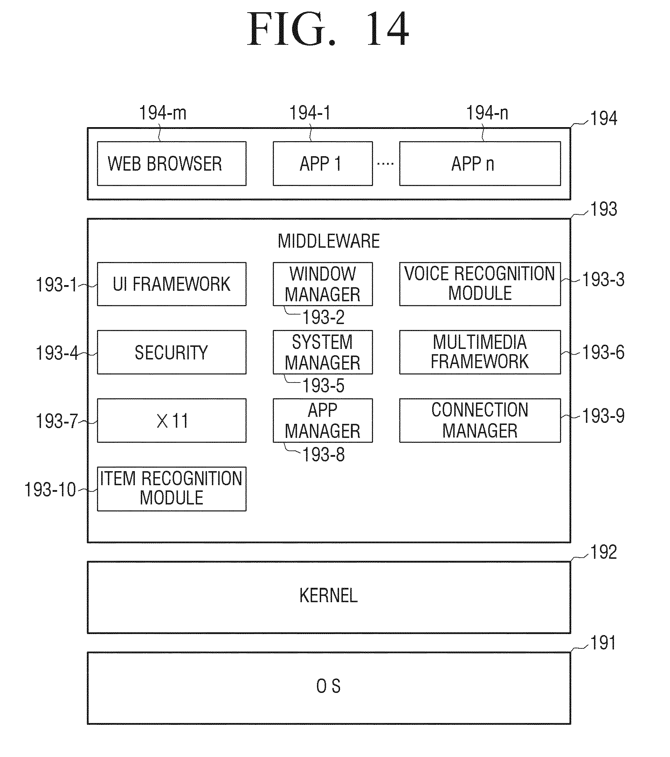

FIG. 14 is an exemplary block diagram of a software structure that is used by a display apparatus 100 according to an embodiment of the present disclosure.

In FIG. 14, software may be stored in the storage 160, but is not limited thereto. The software may be stored in various types of storage means used in the display apparatus 100 and 100A. Referring to FIG. 14, software including an OS 191, a kernel 192, middleware 193, and applications may be stored in the display apparatus 100 or 100A.

The operating system 191 may function to control and manage the overall operation of hardware. That is, the OS 191 is a layer that may take charge of hardware management and basic functions, such as memory or security.

The kernel 192 may serve as a path for transferring various kinds of signals that are sensed by the sensing means in the display apparatus 100 to the middleware 193.

The middleware 193 may include various kinds of software modules that control the operation of the display apparatus. Referring to FIG. 14, the middleware 193 may include a UI framework 193-1, a window manager 193-2, a voice recognition module 193-3, a security module 193-4, a system manager 193-5, a multimedia framework 193-6, an X11 module 193-7, an APP manager 193-8, a connection manager 193-9, and an item recognition module 193-10.

The UI framework 193-1 is a module which may provide various kinds of UIs. The UI framework 193-1 may include an image compositor module that constitutes various kinds of objects, such as text and item, a coordinate synthesizer that calculate coordinates on which the object is displayed, a rendering module that performs rendering of the constituted object on the calculated coordinates, and a 2D/3D UI tool kit that provides a tool for configuring a 2D or 3D UI.

The window manager 193-2 may sense a touch event using a user's body or a pen, a voice recognition event using the user voice, an operation recognition event using a user's operation, and other input events. If such an event is sensed, the window manager 193-2 transfers an event signal to the UI framework 193-1 to perform an operation corresponding to the event.

The voice recognition module 193-3 is a module that may receive the user voice from the receiver and recognize the voice pattern and the voice command. The detector 180-2 may detect the voice pattern and the voice command from the user voice through execution of the voice recognition module 193-3. The voice recognition module 193-3 may compare the voice pattern and the voice command of the received user voice with the pre-stored voice library and recognize the voice pattern and the voice command.

The security module 193-4 is a module that may support hardware certification, request permission, and secure storage.

The system manager 193-5 may monitor states of respective constituent elements in the display apparatus 100 or 100A, and provide the result of monitoring to other modules. For example, if a battery residual amount is insufficient or an error occurs, an event, such as cut-off of the communication connection state, may occur, and in this case, the system manager 193-5 may provide the result of the monitoring to the UI framework 193-1 to output a notification message or a notification sound.

The multimedia framework 193-6 is a module that may reproduce multimedia content stored in the display apparatus 100 or is provided from an external source. The multimedia framework 193-6 may include a player module, a camcorder module, and a sound processing module. Accordingly, an image and sound may be generated and reproduced through reproduction of various kinds of multimedia items.

The X11 module 193-7 is a module that may receive various kinds of event signals from various kinds of hardware provided in the display apparatus 100. Here, the events may be set in various manners, such as an event to receive a user voice, an event to sense a user operation, an event to generate a system alarm, and an event to execute or end a specific program.

The APP manager 193-8 is a module that may manage execution states of various kinds of applications that are installed in the storage 160. If an event to input an application execution command from the X11 module 193-7 is sensed, the APP manager 193-8 calls and executes an application that corresponds to the event.

The connection manager 193-9 is a module that may support wired or wireless network connection. The connection manager 193-9 may include various sub-modules, such as a DNET module and an UPnP module.

The item recognition module 193-10 is a module that may recognize the item that is stored in the storage 160 or is received by the communicator 150, and extracts information on the item. Specifically, the item recognition module 193-10 may extract titles of items, text corresponding to the titles of the items, and detailed information on other items.

On the other hand, on an upper layer of the middleware 193, a browser layer for implementing various functions of the display apparatus 100 or 100A and at least one application layer may exist.

The software structure illustrated in FIG. 14 is merely exemplary, and thus the present exemplary embodiments are not limited thereto. Accordingly, if needed, a part thereof may be omitted, modified, or added. For example, in the storage 160, various programs, such as a sensing module for analyzing signals sensed by the various kinds of sensors, a messenger program, SMS (Short Message Service) & MMS (Multimedia Message Service) programs, a messaging module, such as an e-mail program, a call information aggregator program module, a VoIP module, a web browser (194-m) module, may be additionally provided.

As described above, a user can conveniently control the operation of the display apparatus through the voice input to the display apparatus.

The method for providing a personalized service according to various exemplary embodiments as described above may be stored in a non-transitory readable medium. The non-transitory readable medium may be mounted on various devices to be used. As an example, a program code for performing the method for providing a personalized service, which includes storing voice patterns of a plurality of users and personalization information personally set with respect to the plurality of users, receiving a user voice, and detecting the personalization information that corresponds to the voice pattern of the user voice and controlling a function of the display apparatus according to the detected personalization information, may be stored and provided in the non-transitory readable medium.

The non-transitory computer readable medium is not a medium that stores data for a short period, such as a register, a cache, or a memory, but means a medium which semi-permanently stores data and is readable by a device. Specifically, the non-transitory computer readable medium may be a CD, a DVD, a hard disc, a Blu-ray disc, a USB, a memory card, or a ROM.

While the present disclosure has been shown and described with reference to certain embodiments thereof, it will be understood by those skilled in the art that various changes in form and detail may be made therein without departing from the scope of the present invention, as defined by the appended claims.

## Claims

1. A display apparatus comprising:
a storage configured to store voice patterns of a plurality of users and personalization information set personally with respect to the plurality of users;
an inputter configured to receive a user voice; and
a controller configured to detect the personalization information that corresponds to the voice pattern of the user voice from the storage and to control a function of the display apparatus according to the detected personalization information.

2. The display apparatus as claimed in claim 1, wherein the personalization information includes identification information of the plurality of users, and
if the user voice for turning on the display apparatus is received, the controller is configured to turn on the display apparatus and to perform auto-login to at least one user account using the identification information that corresponds to the user voice.

3. The display apparatus as claimed in claim 1 or 2, wherein if the user voice for turning off the display apparatus is received, the controller is configured to turn off the display apparatus and to perform auto-logout from the at least one user account.

4. The display apparatus as claimed in any one of claims 1 to 3, further comprising a display configured to display at least one menu,
wherein the controller is configured to control at least one of a shape, a size, a position, a color, and a menu display order of the at least one menu according to the detected personalization information.

5. The display apparatus as claimed in any one of claims 1 to 4, wherein the controller is configured to provide at least one of a personal application service for automatically executing an application that corresponds to the detected personalization information, a recommendation service for recommending a menu that corresponds to the detected personalization information, a communication service for displaying a communication screen that corresponds to the detected personalization information, and a channel selection service for selecting a broadcasting channel that corresponds to the detected personalization information.

6. The display apparatus as claimed in any one of claims 1 to 5, further comprising:
a display; and
a sensor configured to sense a user's eye,
wherein if it is determined that the user's eye is not directed to the display for a predetermined time, the controller is configured to change a current mode to a standby mode.

7. The display apparatus as claimed in claim 6, wherein if a plurality of users' eyes are sensed by the sensor, the controller is configured to change the current mode to a common mode for controlling the function of the display apparatus according to a pre-stored default setting.

8. The display apparatus as claimed in any one of claims 1 to 7, wherein if the user voice having a voice pattern that is different from the voice patterns stored in the storage is received, the controller is configured to change a current mode to a common mode for controlling the function of the display apparatus according to a pre-stored default setting.

9. A method for providing a personalized service of a display apparatus, comprising:
storing voice patterns of a plurality of users and personalization information set personally with respect to the plurality of users;
receiving a user voice; and
detecting the personalization information that corresponds to the voice pattern of the user voice and controlling a function of the display apparatus according to the detected personalization information.

10. The method for providing a personalized service as claimed in claim 9, wherein the personalization information includes identification information of the plurality of users, and
the controlling comprises:
if the user voice for turning on the display apparatus is received, turning on the display apparatus; and
performing auto-login to at least one user account using the identification information that corresponds to the user voice.

11. The method for providing a personalized service as claimed in claim 10, wherein the controlling further comprises:
if the user voice for turning off the display apparatus is received, turning off the display apparatus; and
performing auto-logout from the at least one user account.

12. The method for providing a personalized service as claimed in any one of claims 9 to 11, wherein the controlling comprises controlling at least one of a shape, a size, a position, a color, and a menu display order of a displayed menu according to the detected personalization information.

13. The method for providing a personalized service as claimed in any one of claims 9 to 12, wherein the controlling comprises providing the personalized service that corresponds to the detected personalization information,
wherein the personalized service includes at least one of a personal application service for automatically executing an application that corresponds to the detected personalization information, a recommendation service for recommending a menu that corresponds to the detected personalization information, a communication service for displaying a communication screen that corresponds to the detected personalization information, and a channel selection service for selecting a broadcasting channel that corresponds to the detected personalization information.

14. The method for providing a personalized service as claimed in any one of claims 9 to 13, further comprising:
sensing a user's eye; and
if it is determined that the user's eye is not directed to the display apparatus for a predetermined time, changing a current mode to a standby mode.

15. The method for providing a personalized service as claimed in claim 14, further comprising if a plurality of users' eyes are sensed, changing the current mode to a common mode for controlling the function of the display apparatus according to a pre-stored default setting.
